Europäisches Patentamt

European Patent Office

Office européen des brevets

(11) Veröffentlichungsnummer: **0 587 920 A1**

## (12) EUROPÄISCHE PATENTANMELDUNG

(21) Anmeldenummer: **92114238.6**

(22) Anmeldetag: **20.08.92**

(51) Int. Cl.5: **G06K 9/76**

(43) Veröffentlichungstag der Anmeldung:
**23.03.94 Patentblatt 94/12**

(84) Benannte Vertragsstaaten:
**AT BE CH DE DK ES FR GB GR IT LI LU MC NL PT SE**

(71) Anmelder: **CGK Computer Gesellschaft Konstanz mbH**
**Max-Stromeyer-Strasse 116**
**D-78467 Konstanz(DE)**

(72) Erfinder: **Schnitzlein, Markus, Dipl.-Phys.**
**Mezgerwaidring 43**
**W-7760 Radolfzell(DE)**

(74) Vertreter: **Fuchs, Franz-Josef, Dr.-Ing. et al**
**Postfach 22 13 17**
**D-80503 München (DE)**

(54) **Verfahren zur optischen Erkennung von Strukturelementen auf Bildvorlagen.**

(57) Aus der jeweils mit Licht beleuchteten Bildvorlage (IM) wird ein Beugungsmuster erzeugt und von mehreren, zu unterschiedlichen Vergleichs-Strukturelementen (VSE) gebildeten holografischen Bildmustern (z.B. VHA...VHD) parallel überlagert. Aus der Überlagerung jedes holografischen Bildmusters (VHA...) mit dem Beugungsmuster ergeben sich Lichtpunkte (z.B. LP1...), deren Helligkeitswerte (z.B. x, o,-, + ) ermittelt werden. Die zu jedem Strukturelement (z.B. A) der Bildvorlage (IM) entsprechend der Lage der Vergleichs-Strukturelemente (z.B. A...D) ermittelten Helligkeitswerte (z.B. x,o,-,-) werden zu einem Merkmalsvektor für das jeweilige Strukturelement zusammengefaßt. Auf diese Weise können auf optischem Wege parallel gewonnene Korrelationen zwischen den Strukturelementen für eine Charakterisierung herangezogen und damit die Erkennungsqualität und -sicherheit gesteigert werden.

EP 0 587 920 A1

Die Erfindung betrifft ein Verfahren zur optischen Erkennung von Strukturelementen auf Bildvorlagen.

Erkennungssysteme für die maschinelle optische Bearbeitung von Bildvorlagen können bekanntlich in zwei Teilsysteme gegliedert werden, von denen das erste Teilsystem die Aufgabe der Bildvor- und -aufbereitung und das zweite Teilsystem die Aufgabe der eigentlichen Erkennung von Strukturelementen einschließlich ihrer Klassifikation innehaben. Ein Beispiel derartiger Strukturelemente stellen die von Schriftlesesystemen zu erkennenden Schriftzeichen auf Belegen, Formularen usw. dar.

Außer der üblicherweise auf der Grundlage eines zweidimensionalen Abbildes des Zeichens durchzuführenden Zeichenerkennung besteht die Möglichkeit, ein transformiertes Bild der Vorlage für die optische Unterstützung der Zeichenerkennung zu generieren. Aus "Optical Holographie" by Collier, Burckhardt und Lin, Academic Press, 1971, Seiten 151ff und 402ff, ist ein Verfahren zum Auffinden von einzelnen Zeichen auf einer Bildvorlage bekannt, bei dem die Fouriertransformierte in Form eines Beugungsmusters zur jeweiligen transparenten Bildvorlage erzeugt wird. Dieses transformierte Bild wird von dem holografischen Bildmuster des jeweils aufzufindenden Zeichens überlagert, wodurch ein Lichtpunkt am räumlichen Abbildungsort der Bildvorlage entsteht.

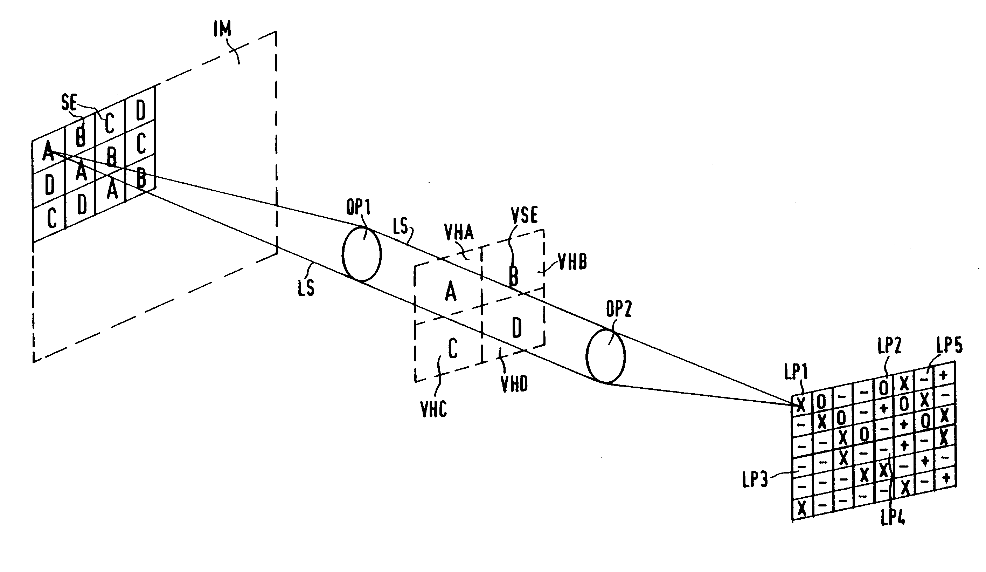

Zur Identifikation der einzelnen Zeichen wird jeweils der absolute Helligkeitswert des sich ergebenden Lichtpunkts gemessen und anhand dieses einen Helligkeitswertes jeweils festgelegt, welches Zeichen auf der Bildvorlage vorliegt. Ein Problem besteht dabei darin, daß die Zeichen auf den Bildvorlagen meistens nicht in der Form, wie sie in der Figur 14.10(a) auf Seite 407 dargestellt sind, auftreten. Vielmehr sind die Zeichen von Hintergrundinformationen und dergleichen überlagert, die die optische Zeichenerkennung erschweren. Darüber hinaus bleiben beim bekannten Verfahren die Ähnlichkeiten von Zeichen unberücksichtigt.

Dies beeinträchtigt die Qualität der Zeichenerkennung und insbesondere die der Erkennung von Strukturelementen, die beispielsweise nicht als Zusammenhangsgebiete vorliegen und somit vom bekannten Verfahren nicht ohne weiteres klassifizierbar sind.

Daher ist es Aufgabe der vorliegenden Erfindung, ein Verfahren zur optischen Erkennung von Strukturelementen auf Bildvorlagen zu schaffen, durch das die Erkennungsqualität und -sicherheit bei gleichzeitig hoher Verarbeitungsleistung gesteigert werden kann.

Diese Aufgabe wird durch die Merkmale des Patentanspruches 1 gelöst.

Demnach wird ein Beugungsmuster zu einer jeweils mit Licht beleuchteten Bildvorlage erzeugt und von mehreren holografischen Bildmustern, die zu unterschiedlichen Vergleichs-Strukturelementen gebildet werden, parallel überlagert. Aus der Überlagerung jedes holografischen Bildmusters mit dem Beugungsmuster ergeben sich Lichtpunkte, deren Helligkeitswerte ermittelt werden. Aus den zu jedem Strukturelement der Bildvorlage entsprechend der Lage der Vergleichs-Strukturelemente ermittelten Helligkeitswerten wird ein Merkmalsvektor für das jeweilige Strukturelement gebildet.

Durch den Vergleich des auf der Bildvorlage zu erkennenden Strukturelements mit verschiedenen Referenz-Strukturelementen entstehen Korrelationen, deren Güte jeweils unmittelbar dem Helligkeitswert des aus der Überlagerung sich ergebenden Lichtpunkts entnehmbar ist. Aus den durch die optische Bildvorlagenverarbeitung parallel gewonnenen Korrelationsergebnissen läßt sich jeweils der Merkmalsvektor zur Charakterisierung eines Strukturelements ableiten. Auf diese Weise kann die Erkennung der einzelnen Strukturelemente jeweils auf eine Anzahl von charakteristischen Merkmalen, die in Form von Helligkeitswerten Informationen bezüglich der Ähnlichkeiten von Strukturelementen liefern, gestützt werden. Dies führt zu einer höheren Erkennungsqualität und -sicherheit bei einer durch die parallele optische Bildvorlagenverarbeitung bedingten hohen Verarbeitungsleistung.

Gemäß einer Weiterbildung der Erfindung wird die Bildvorlage mit kohärentem, monochromatischem Licht beleuchtet. Dies hat den Vorteil, daß sich das Beugungsmuster wegen der Interferenz- und Beugungseigenschaften des kohärenten Lichtes mit optischen Mitteln einfach erzeugen läßt.

Gemäß einer anderen Weiterbildung der Erfindung werden Merkmalsvektoren für alle auf der Bildvorlage enthaltenen, die Strukturelemente bildenden Schriftzeichen anhand der Helligkeitswerte der sich aus der Überlagerung des Beugungsmusters mit den holografischen Bildmustern einer Vielzahl von Vergleichs-Schriftzeichen ergebenden Lichtpunkte gebildet. Durch die Möglichkeit, alle Schriftzeichen einer Bildvorlage gleichzeitig mit einer Vielzahl von vorgegebenen Referenz-Schriftzeichen zu korrelieren, kann die Verarbeitungsgeschwindigkeit insbesondere für die Zeichenerkennung optimiert werden.

Eine unmittelbare Verwendung des erfindungsgemäßen Verfahrens für die Erkennung von Strukturelementen auf Mikrofilm-Bildvorlagen hat den Vorteil, daß für die Ausleuchtung einer kleinen Bildvorlagenfläche mit kohärentem Licht, beispielsweise Laserlicht üblicher Art, eine vergleichsweise geringe Leistung erforderlich ist.

Die Erfindung wird anhand eines in der Zeichnung dargestellten Ausführungsbeispiels erläutert, wobei die einzige Figur eine optische Anordnung zur Korrelation von zwölf auf einer Bildvorlage vorhandenen Schriftzeichen mit jeweils vier Vergleichs-Schriftzeichen zeigt.

Der prinzipielle Aufbau der Anordnung bezweckt eine optische Unterstützung der Erkennung von Strukturelementen auf Bildvorlagen. Die jeweils zu untersuchende Bildvorlage IM weist eine Vielzahl von Strukturelementen SE auf, von denen im Ausführungsbeispiel aus Vereinfachungsgründen nur insgesamt zwölf Elemente dargestellt sind. Als Strukturelemente SE werden Schriftzeichen gewählt, die jeweils aus einem Buchstaben A, B, C, oder D bestehen.

Analog zu bekannten Erkennungsmethoden, die auf einem zweidimensionalen Bild eines Schriftzeichens im Ortsraum basieren, beruht das Erkennungsverfahren gemäß der Erfindung auf einem optisch transformierten Bild. Eine bekannte Transformation ist die Fouriertransformation, bei der die Verarbeitungsprozesse auf optischem Wege in Realzeit simultan ausgeführt werden können.

Die Bildvorlage IM wird mit Licht, vorzugsweise kohärentem und monochromatischem Licht, beleuchtet, so daß ein transparentes Abbild der Bildvorlage IM mit den einzelnen Strukturelementen SE entsteht. Befindet sich die transparente, mit demselben Licht durchstrahlte Bildvorlage beispielsweise in der Brennebene einer optischen Abbildungseinrichtung OP1, entsteht durch eine Lichtbeugung an der beleuchteten Bildvorlage und durch eine Parallelisierung der auf die optische Abbildungseinrichtung OP1 auftreffenden Lichtstrahlen LS ein Beugungsmuster. Die Funktion der optischen Abbildungseinrichtung OP1 kann dabei von einer Linse übernommen werden.

Das auf diese Weise erzeugte Beugungsmuster, das hinter der Linse OP1 als ein Hologramm beobachtet werden kann, wird von mehreren, zu unterschiedlichen Vergleichs-Strukturelementen gebildeten, holografischen Bildmustern parallel überlagert. Im Ausführungsbeispiel werden die Vergleichs-Strukturelemente VSE von den Vergleichs-Schriftzeichen A, B, C, D gebildet, die als die zu erkennenden Strukturelemente SE auf der zu untersuchenden Bildvorlage IM vorhanden sind.

Aus der Überlagerung des Beugungsmusters mit den einzelnen holografischen Bildmustern VHA, VHB, VHC, sowie VHD ergeben sich Korrelationen zwischen jeweils einem auf der Bildvorlage IM zu erkennenden Strukturelement SE und den verschiedenen Vergleichs-Strukturelementen VSE. Dabei resultieren aus den parallelen Überlagerungen Lichtpunkte, deren räumlicher Abbildungsort jeweils durch eine im parallelen Strahlengang hinter den holografischen Bildmustern VHA...VHD angeordnete optische Abbildungseinrichtung OP2, die beispielsweise aus einer Linse besteht, festgelegt ist. Ein für jeden Lichtpunkt von einem lichtempfindlichen Sensor gemessener Helligkeitswert stellt ein direktes Maß für die Güte der jeweiligen Korrelation dar.

Somit ergeben sich für das in der Bildvorlage IM an erster Stelle stehende Schriftzeichen A aus der simultanen Überlagerung des Beugungsmusters mit den vier holografischen Bildmustern VHA...VHD die Lichtpunkte LP1, LP2, LP3 und LP4, deren Helligkeitswerte zu einem Merkmalsvektor $\vec{m}$ mit

$$\vec{m} = (x(LP1), o(LP2), - (LP3), - (LP4))$$

zusammgefaßt werden. Die entsprechend der Lage der Vergleichs-Strukturelemente VSE, bestehend aus den Vergleichs-Schriftzeichen A...D, ermittelten Helligkeitswerte x, o, - bedeuten eine hohe, eine mittlere, sowie eine niedrige Intensität, was gleichbedeutend ist mit einer optimalen, einer mittleren, sowie einer minimalen Korrelation des Schriftzeichens A mit dem jeweiligen Vergleichs-Schriftzeichen A, B, C oder D. Ein bei der Korrelation des auf der Bildvorlage IM enthaltenden Schriftzeichens D mit dem Vergleichs-Schriftzeichen B sich ergebender Lichtpunkt LP5 weist einen Helligkeitswert + auf, der anzeigt, daß beispielsweise das Schriftzeichen D mit dem Vergleichs-Schriftzeichen B mehr korreliert als mit dem Vergleichs-Schriftzeichen A.

In entsprechender Weise können zu den anderen Strukturelementen SE der Bildvorlage IM entsprechende Merkmalsvektoren $\vec{m}$ gebildet werden, die zur Charakterisierung des jeweils zu erkennenden Strukturelements SE herangezogen werden. Ein wesentlicher Vorteil der Einbeziehung optischer Mittel für die Erkennung von Strukturelementen auf Bildvorlagen besteht in der Parallelverarbeitung, mit der sich simultan die Korrelationen aller auf einer Bildvorlage enthaltenen Schriftzeichen mit einer Vielzahl (> 100) von Vergleichs-Schriftzeichen bestimmen lassen.

Diese Korrelationsergebnisse in Form einer Intensitätsverteilung gemäß den gemessenen Helligkeitswerten der einander entsprechenden Lichtpunkte können als charakteristische Merkmale jedes einzelnen Schriftzeichens aufgefaßt und in gleicher Weise wie die bei bekannten Erkennungsmethoden ausgewerteten Hell-Dunkel-Übergänge, Grauwerteverteilungen usw. zur Klassifikation bzw. Erkennung der verschiedenen Schriftzeichen verwendet werden. Die Klassifikation erfolgt mit herkömmlichen Methoden.

Für den besonderen Fall der Erkennung aller Schriftzeichen auf einer Bildvorlage besteht die Möglichkeit, diese Schriftzeichen gleichzeitig mit beispielsweise 100 vorgegebenen Vergleichs-Schriftzeichen zu korrelieren, wofür eine Sensoranordnung von beispielsweise 1024 x 1024 einzelnen Sensoren zur Auswertung jeweils eines Lichtpunktes in der Meßebene vorgesehen ist.

Das erfindungsgemäße optische Erkennungsverfahren läßt sich unmittelbar bei Mikrofilm-Bildvorlagen zur Text- oder Objektsuche anwenden, da die Vorlagen jeweils als transparente Bilder mit vergleichsweise geringer Fläche vorliegen und damit eine Ausleuchtung mit monochromatischem und kohärentem Licht, wie es vor allem bei Laserlicht zur Verfügung steht, mit geringer Leistung möglich ist.

Für den Fall, daß ein transparentes Bild der aus Papier oder ähnlichem bestehenden Vorlagen in kohärentem und momochromatischem Licht nicht ohne weiteres erzeugt werden kann, ist es möglich, ein mit polychromatischem und inkohärentem Licht erzeugtes Bild mit Hilfe eines elektrisch oder optisch adressierbaren Bildwandlers in ein Negativbild umzuwandeln. Den optisch adressierbaren Bildwandlern ist dabei gemeinsam, daß durch die Bestrahlung mit Licht die physikalischen Eigenschaften des Bildwandlers verändert werden (z.B. Brechungsindex, Leitfähigkeit, Polarisation). Mit einer besonderen Art des Bildwandlers lassen sich beliebig, d.h. mit inkohärentem Licht, beleuchtete Bildvorlagen jeweils durch Hell-Dunkel-Modulation des kohärenten Laserlichts abbilden.

**Patentansprüche**

1. Verfahren zur optischen Erkennung von Strukturelementen (SE) auf Bildvorlagen (IM), bei dem
   - ein Beugungsmuster zu einer jeweils mit Licht beleuchteten Bildvorlage (IM) erzeugt und von mehreren, zu unterschiedlichen Vergleichs-Strukturelementen (VSE) gebildeten holografischen Bildmustern (z.B. VHA...VHD) parallel überlagert wird,
   - Helligkeitswerte (z.B. x,o,-,+) von jeweils aus der Überlagerung jedes holografischen Bildmusters (VHA...) mit dem Beugungsmuster sich ergebenden Lichtpunkten (z.B. LP1...) ermittelt werden, und bei dem
   - die zu jedem Strukturelement (z.B. A) der Bildvorlage (IM) entsprechend der Lage der Vergleichs-Strukturelemente (z.B. A...D) ermittelten Helligkeitswerte (z.B. x,o,-,-) zu einem Merkmalsvektor für das jeweilige Strukturelement zusammengefaßt werden.

2. Verfahren nach Anspruch 1, **dadurch gekennzeichnet,** daß die Bildvorlage (IM) mit kohärentem und monochromatischem Licht beleuchtet wird.

3. Verfahren nach Anspruch 1 oder 2, **dadurch gekennzeichnet,** daß die auf der Bildvorlage (IM) zu erkennenden Strukturelemente (SE) von Schriftzeichen (z.B. A,B,C,D) gebildet werden.

4. Verfahren nach Anspruch 3, **dadurch gekennzeichnet,** daß Merkmalsvektoren für alle auf der Bildvorlage (IM) enthaltenen Schriftzeichen anhand der Helligkeitswerte (z.B. x,o,-,+) der sich aus der Überlagerung des Beugungsmusters mit den holografischen Bildmustern (VHA...) einer Vielzahl von Vergleichs-Schriftzeichen (z.B. A...) ergebenden Lichtpunkte (z.B. LP1...) gebildet werden.

5. Verwendung des Verfahrens nach einem der vorhergehenden Ansprüche für die Erkennung von Strukturelementen auf Mikrofilm-Bildvorlagen.

| Europäisches Patentamt | EUROPÄISCHER RECHERCHENBERICHT | Nummer der Anmeldung EP 92 11 4238 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | OPTICAL HOLOGRAPHY 1971, Seiten 394 - 404 R. J. COLLIER ET AL. * Seite 401, Zeile 25 - Zeile 31; Abbildung 14.6 * | 1-4 | G06K9/76 |
| | --- | | |
| A | US-A-4 790 024 (N. A. PEPPERS) 6. Dezember 1988 * Spalte 3, Zeile 20 - Zeile 55 * | 1-4 | |
| | --- | | |
| A | PROC. OF THE SOC. OF PHOTO-OPTICAL INSTRUMENTATION ENGINEERS Bd. 177, 7. April 1979, WASHINGTON D. C. Seiten 24 - 31 J. E. HINDS ET AL 'optical word recognition by coherent optical correlation' * Zusammenfassung * | 5 | |
| | ----- | | RECHERCHIERTE SACHGEBIETE (Int. Cl.5) |
| | | | G06K |

Der vorliegende Recherchenbericht wurde für alle Patentansprüche erstellt

| Recherchenort | Abschlußdatum der Recherche | Prüfer |
|---|---|---|
| DEN HAAG | 20 APRIL 1993 | GRANGER B.D. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
.............................................................
& : Mitglied der gleichen Patentfamilie, übereinstimmendes Dokument